# EUROPÄISCHE PATENTSCHRIFT

(11) **EP 1 031 052 B1**
(45) Veröffentlichungstag und Bekanntmachung des Hinweises auf die Patenterteilung: **22.01.2003**
(21) Anmeldenummer: 98962192.5
(22) Anmeldetag: 23.10.1998
(51) Int. Cl.: G02B 6/38

(54) **FASEROPTISCHES ENDSTÜCK**
ENDPIECE FOR OPTICAL FIBRES
PIECE TERMINALE POUR FIBRES OPTIQUES

(30) Priorität: 11.11.1997 DE 19750757
(43) Veröffentlichungstag der Anmeldung: 30.08.2000
(73) Patentinhaber: Infineon Technologies AG, 81669 München (DE)
(72) Erfinder: MELCHIOR, Lutz, D-12559 Berlin (DE)
(74) Vertreter: Müller, Wolfram Hubertus, Dipl.-Phys.
(86) Internationale Anmeldenummer: DE9803168
(87) Internationale Veröffentlichungsnummer: WO99024854

(56) Entgegenhaltungen:
- EP-A- 0 241 724
- EP-A- 0 309 677
- EP-A- 0 760 488
- DE-B- 2 525 132
- US-A- 5 257 334
- PATENT ABSTRACTS OF JAPAN vol. 007, no. 210 (P-223), 16. September 1983 & JP 58 105115 A (FUJITSU KK), 22. Juni 1983

## Beschreibung

Die Erfindung liegt auf dem Gebiet der Lichtwellenleiteranschlußtechnik und ist bei der konstruktiven Ausgestaltung eines faseroptischen Endstückes anzuwenden, das aus einem eine Rückseite und eine Kopplungsstirnfläche aufweisenden Grundkörper, einem eine vordere und eine hintere Fläche aufweisenden Fixierkörper und wenigstens einem zwischen dem Grundkörper und dem Fixierkörper in einer Nut festgelegten Lichtwellenleiter besteht.

Bei einem bekannten faseroptischen Endstück dieser Art ist der Fixierkörper in eine Vertiefung des Grundkörpers längs dessen Führungsstrukturen eingeschoben und im eingeschobenen Zustand durch Wechselwirkung seiner Führungsflächen mit den Führungstrukturen des Grundkörpers in der Vertiefung festgeklemmt. Die Vertiefung sowie die Nut und der darin festgelegte Lichtwellenleiter erstrecken sich bis zur Kopplungsstirnfläche. Dabei vermindert sich der Querschnitt der Vertiefung und des Fixierkörpers längs der Vertiefung in Richtung der Kopplungsstirnfläche. Die vordere Fläche des Fixierkörpers ist breiter als die Querschnittsbreite der Vertiefung in der Ebene der Kopplungsstirnfläche, so daß der Fixierkörper mit seiner vorderen Fläche nicht bis an die Kopplungsstirnfläche des Grundkörpers herangeschoben werden kann. Damit liegen der bzw. die Lichtwellenleiter in einem Abschnitt zwischen der vorderen Fläche des Fixierkörpers und der Kopplungsstirnfläche des Grundkörpers frei (WO 97/34179).

An sich ist weiterhin ein faseroptisches Endstück bekannt, das einen eine Kopplungsstirnfläche aufweisenden Grundkörper mit einer Vertiefung aufweist. In dieser Vertiefung sind V-förmige Nuten zur Aufnahme von Lichtwellenleitern vorgesehen, wobei die Lichtwellenleiter durch einen eine Andruckfläche sowie eine vordere Stirnfläche aufweisenden Druckkörper senkrecht zu ihrer Längsrichtung in die Nuten gedrückt und nachfolgend mit einem Kleber dauerhaft festgelegt werden. Die Kopplungsstirnfläche des Grundkörpers und die vordere Stirnfläche des Durckkörpers liegen dabei in einer gemeinsamen Ebene. Bei der Herstellung dieses Endstücks muß zumindest solange eine von außen zugeführte Druckkraft auf den Druckkörper aufrechterhalten werden, bis der Kleber ausgehärtet ist. Hierdurch werden längere Takt- und Fertigungszeiten verursacht. Weiterhin müssen spezielle Fertigungsvorrichtungen bereitgestellt werden (EP 0 760 488 A1).

Ausgehend von einer Anordnung mit den Merkmalen des Oberbegriffs des Anspruchs 1 (WO 97/34179) ist es Aufgabe der Erfindung, ein kostengünstiges faseroptisches Endstück zu schaffen, bei dem der Lichtwellenleiter gleichmäßig entlang seiner Kontaktlinien in Form einer Dreipunktlagerung bis zu seinem in der Ebene der Kopplungsstirnfläche gelegenen Ende festgelegt ist und somit vor lokalen Überbeanspruchungen durch ein Verkippen des Fixierkörpers und/oder durch einen punktweisen Kontakt mit dem Lichtwellenleiter geschützt ist.

Gemäß der Erfindung wird diese Aufgabe dadurch gelöst, daß der verminderte Querschnitt der Vertiefung und/oder des Fixierkörpers der Kopplungsstirnfläche abgewandt ist und daß die Kopplungsstirnfläche des Grundkörpers und die vordere Fläche des festgeklemmten Fixierkörpers in einer gemeinsamen Ebene liegen.

Durch die Anordnung der vorderen Fläche des festgeklemmten Fixierkörpers und der Kopplungsstirnfläche des Grundkörpers in einer gemeinsamen Ebene wird eine gemeinsame Ankopplungsund Bearbeitungsfläche geschaffen. Nach Zusammenfügen von Grund- und Fixierkörper kann der Lichtwellenleiter an dieser Fläche ohne nachteilige Auswirkung poliert werden.

Dadurch, daß der verminderte Querschnitt der Vertiefung und/oder des Fixierkörpers der Kopplungsstirnfläche abgewandt ist, muß der Fixierkörper von der Kopplungsstirnfläche aus in die Vertiefung eingeschoben werden. Dies gestattet den Austausch von fehlerhaften Lichtwellenleitern zu einem späteren Zeitpunkt. Nach Herausschieben des Fixierkörpers aus der Vertiefung, kann der schadhafte Lichtwellenleiter entnommen und gegen einen fehlerfreien ausgetauscht werden.

Eine vorteilhafte Ausführungsform, bei der mehrere in einer Ebene und zueinander parallel verlaufende V-förmige Nuten für entsprechend mehrere Lichtwellenleiter und parallel zu den V-förmigen Nuten verlaufende, an der Kopplungsstirnfläche angeordnete Ausrichtmittel vorgesehen sind, zeichnet sich dadurch aus, daß die Ausrichtmittel in der Ebene der Nuten angeordnet sind. Dadurch können alle beim Herstellungsprozeß eventuell notwendigen Justagearbeiten auf eine einzige Ebene bezogen werden.

Nachfolgend wird die Erfindung an Hand eines Ausführungsbeispiels näher erläutert. Es zeigen:
- Figur 1: ein erfindungsgemäßes faseroptisches Endstück mit eingelegten Lichtwellenleitern,
- Figur 2: ein faseroptisches Endstück mit eingeschobenem Fixierkörper,
- Figur 3: ein faseroptisches Endstück in Draufsicht,
- Figur 4: die Frontansicht eines faseroptischen Endstücks und
- Figur 5: einen vergrößerten Ausschnitt der Frontansicht.

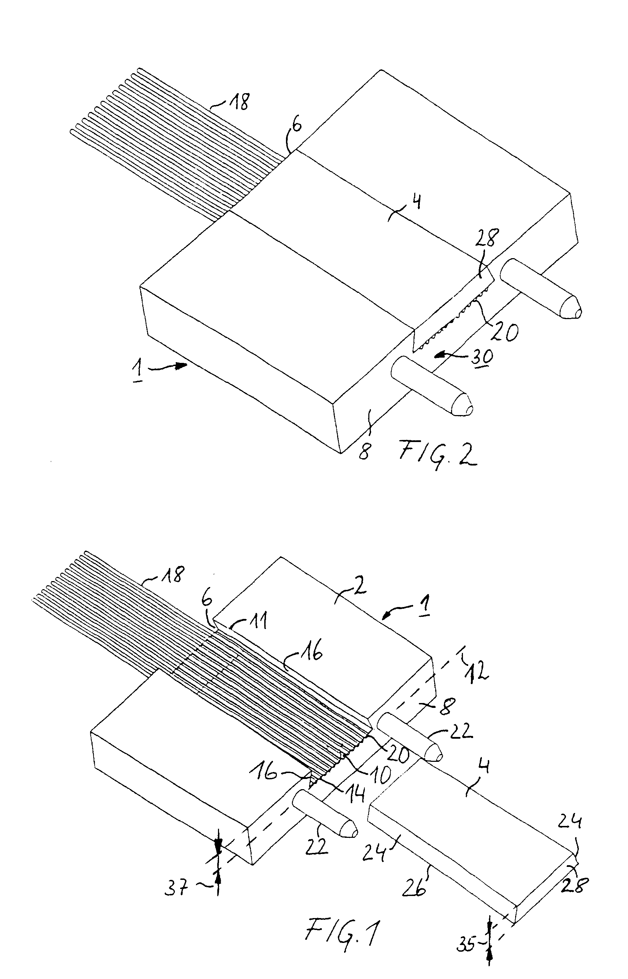

In Figur 1 ist ein faseroptisches Endstück 1 dargestellt, das aus einem quaderförmigen Grundkörper 2 und einem Fixierkörper 4 besteht. Im Grundkörper 2 ist eine Vertiefung 6 vorgesehen, die den Grundkörper 2 in einer Richtung vollständig durch-setzt und zu einer freien Kopplungsstirnfläche 8 des Grundkörpers 2 führt. In die Bodenfläche 10 der Vertiefung 6 sind in einer Ebene 12 V-förmige Längsnuten 14, die ebenfalls zur Kopplungsstirnfläche 8 führen und die gesamte Vertiefung 6 durchlaufen, eingearbeitet. Die Seitenwände 16 der Vertiefung 6 laufen von der Bodenfläche 10 zur Deckseite 11 hin aufeinander zu, so daß das Querschnittsprofil senkrecht zu den Längsnuten 14 schwalbenschwanzförmig ist. In die Längsnuten 14 sind Lichtwellenleiter 18 eingelegt, deren Enden 20 mit der Kopplungsstirnfläche 8 abschließen. In der Ebene 12 der eingelegten Lichtwellenleiter 18 sind beiderseitig der Lichtwellenleiter 18 Ausrichtstifte 22 vorgesehen, die parallel zu den Lichtwellenleitern 18 ausgerichtet sind und die Kopplungsstirnfläche 8 überragen.

Der im Querschnitt gleichschenklig trapezförmige Fixierkörper 4 wird von der Kopplungsstirnfläche 8 aus in die Vertiefung 6 eingeschoben. Dabei wird er von den Seitenwänden 16 der Vertiefung 6, die grundkörperseitige Führungsstrukturen 16 bilden, an einer Bewegung quer zu den eingelegten Lichtwellenleitern 18 gehindert. Die geneigten Seitenflächen 24 des Fixierkörpers 4 liegen im eingeschobenen Zustand plan an den Seitenwänden 16 der Vertiefung 6. Durch die geneigte Lage der grundkörperseitigen Seitenwände 16 und fixierkörperseitigen Seitenflächen 24, die mit der Grundfläche 10 der Vertiefung 6 einen Winkel kleiner als 90° einschließen, wird der Fixierschließt der Fixierkörper 4 mit einer vorderen Fläche 28 bündig mit den Enden 20 der Lichtwellenleiter 18 und der Kopplungsstirnfläche 8 ab. An dieser so gebildeten gemeinsamen Fläche 30 können die Lichtwellenleiterenden 20 zusammen mit der vorderen Fläche 28 und der Kopplungsstirnfläche 8 poliert werden. Die gemeinsame Fläche 30 dient nachfolgend als Koppelfläche zur Ankopplung der Lichtwellenleiter 18 an elektrooptische Komponenten oder zur Kopplung mit anderen Lichtwellenleitern. Zur Verminderung störender Reflexionen kann die gemeinsame Fläche 30 schiefwinklig zur Längsachse der Lichtwellenleiter 18 stehen. Sofern nach dem Einschieben des Fixierkörpers 4 dieser über die Kopplungsstirnfläche 8 hinausragt, wird die gemeinsame Fläche 30 durch nachfolgendes Polieren geschaffen.

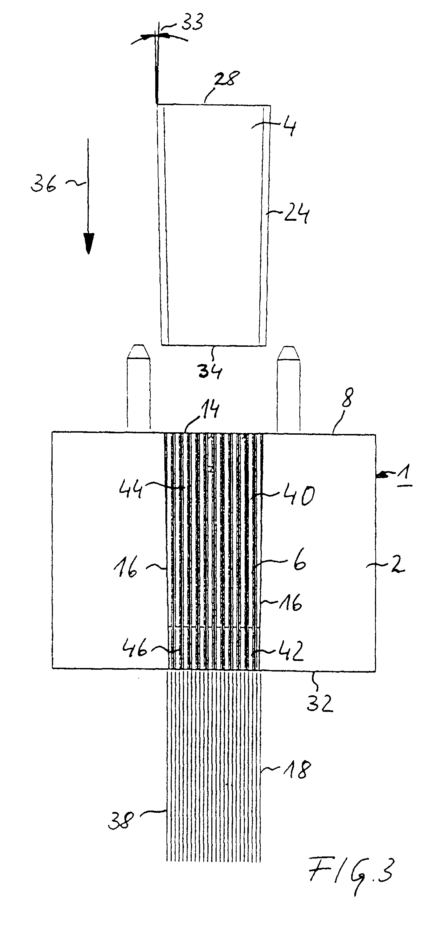

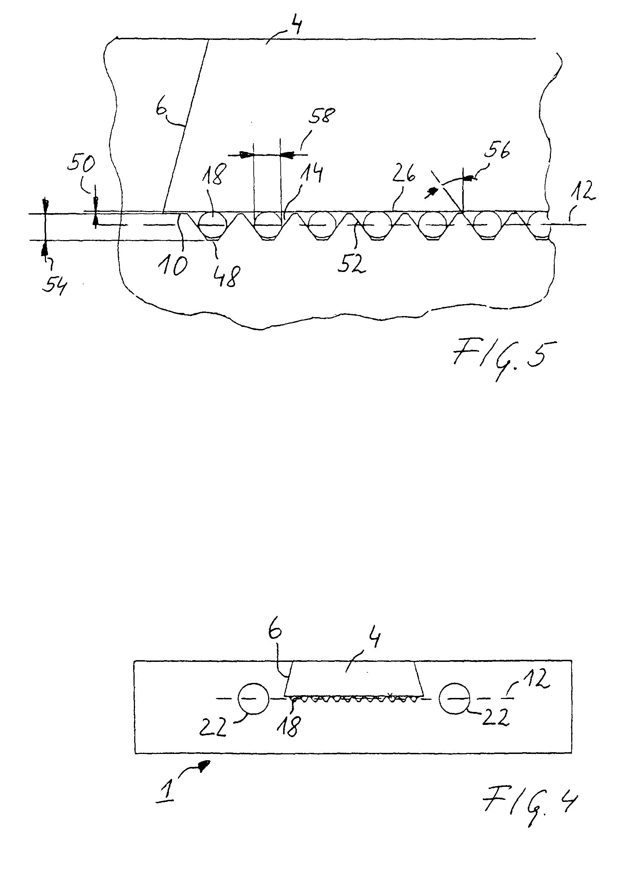

Die erfindungsgemäße Ausgestaltung der Vertiefung 6 und des Fixierkörpers 4 zum Erreichen einer optimalen Klemmwirkung ist in Figur 3 dargestellt. Die Vertiefung 6 ist an der Kopplungsstirnfläche 8 breiter als an der der Kopplungsstirnfläche 8 gegenüberliegenden Rückseite 32 des Grundkörpers 2. Die damit verbundene Querschnittsverkleinerung nimmt über der gesamten Länge der Vertiefung 6 gleichmäßig zu, so daß die Seitenwände 16 jeweils unter einem spitzen Winkel 33 zur Einschubrichtung 36 stehen. Der Winkel 33 liegt vorzugsweise zwischen 1° und 5°. Der Fixierkörper 4 weist eine mit der Vertiefung 6 korrespondierende Querschnittsveränderung auf. Dadurch kann er mit seinem schmalen Ende 34 voraus zunächst ohne Klemmwirkung eingeschoben werden. Das klemmwirkungsfreie Einschieben setzt sich solange fort, bis die Seitenflächen 24 des Fixierkörpers 4 beiderseitig flächig mit den Seitenwänden 16 der Vertiefung 6 in Kontakt treten und aneinander reiben. Die Querschnittsveränderung von Vertiefung 6 und Fixierkörper 4 sind so aufeinander abgestimmt, daß die Selbsthemmung der Bewegung in Einschubrichtung 36 mit einem gleichmäßigen Andrücken der Lichtwellenleiter 18 in den Längsnuten 14 korrespondiert. Gleichzeitig schließt die vordere Fläche 28 des Fixierkörpers 4 mit der Kopplungsstirnfläche 8 bündig ab. Eine adäquate Klemmwirkung kann auch durch eine kontinuierliche Abnahme der Dicke 35 des Fixierkörpers 4 bzw. der Höhe 37 der Vertiefung 6 in Einschubrichtung 36 erzielt werden.

Durch den Fixierkörper 4 werden sowohl die von ihren Mänteln 38 befreiten Lichtwellenleiterendabschnitte 40, als auch die noch vollständig umhüllten Lichtwellenleiterabschnitte 42 fixiert. Die entmantelten Abschnitte 40 liegen hierbei im stirnflächennäheren Bereich 44, während die vollständig umhüllten Abschnitte 42 im rückseitigen Bereich 46 der Vertiefung 6 liegen und so eine gegen mechanische Belastungen geschützte Aufnahme im Endstück 1 erfahren. Die Weite der Nuten 14 nimmt entsprechend der Querschnittsveränderung der teilweise entmantelten Lichtwellenleiter 18 stufenförmig in Richtung der Kopplungsstirnfläche 8 ab, so daß die Lichtwellenleiter 18 immer in der Ebene 12 liegen. Nach dem vollständigen Einschieben des Fixierkörpers 4 kann dieser zusammen mit den Lichtwellenleitern 18 mittels eines Klebers dauerhaft in der Vertiefung 6 festgelegt werden. Beim Applizieren einer gewünschten Klebermenge, beispielsweise im rückseitigen Bereich 46 der Vertiefung 6, gelangt der Kleber durch Kapillarkräfte bis zur Kopplungsstirnfläche 8. Der Kleber kann aber auch bereits beim Zusammenfügen von Grundkörper 2 und Fixierkörper 4 aufgetragen werden.

Eine stirnseitige Ansicht des faseroptischen Endstücks 1 ist in den Figuren 4 und 5 dargestellt. Die Lichtwellenleiter 18 sind in der Ebene 12 angeordnet, in der auch die Ausrichtstifte 22 plaziert sind. Der Querschnitt der V-förmigen Längsnuten 14 weist hier ein stumpfes Ende 48 auf. Die Lichtwellenleiter 18 liegen entlang einer parallel zur Lichtwellenleiterachse verlaufenden Linie auf den Flanken 52 der Längsnuten 14, nicht jedoch auf deren stumpfen Enden 48, auf und überragen um das Maß 50 die Grundfläche 10 der Vertiefung. Das Maß 50 ergibt sich aus der Tiefe 54 und dem Flankenwinkel 56 der Längsnuten 14 und dem Durchmesser 58 der Lichtwellenleiter und beträgt vorzugsweise 10 bis 20 µm. Der auf die Lichtwellenleiter 18 geklemmte Fixierkörper 4 berührt mit seiner Unterseite 26 nur die Lichtwellenleiter 18 und liegt nicht auf der Grundfläche 10 der Vertiefung 6 auf. Somit sind die Lichtwellenleiter 18 im Querschnitt durch eine Dreipunktlagerung exakt positioniert.

## Patentansprüche

1. Faseroptisches Endstück
mit einem Grundkörper (2), einem Fixierkörper (4) und einem zwischen dem Grundkörper (2) und dem Fixierkörper (4) in einer Nut (14) festgelegten Lichtwellenleiter (18),
wobei der Grundkörper (2) eine mit seitlichen Führungsstrukturen (16) versehene Vertiefung (6) aufweist und der eine vordere und eine hintere Fläche aufweisende Fixierkörper (4) mit den Führungsstrukturen (16) des Grundkörpers (2) angepaßten Führungsflächen (24) versehen, in die Vertiefung (6) des Grundkörpers längs dessen Führungsstrukturen (16) eingeschoben und im eingeschobenen Zustand durch Wechselwirkung seiner Führungsflächen (24) mit den Führungsstrukturen (16) des Grundkörpers in der Vertiefung (6) festgeklemmt ist,
und wobei sich der Querschnitt der Vertiefung (6) und/oder des Fixierkörpers (4) in Längsrichtung der Vertiefung vermindert und
sich die Vertiefung (6) sowie die Nut (14) und der darin festgelegte Lichtwellenleiter (18) bis zur Kopplungsstirnfläche (8) erstrecken,
**dadurch gekennzeichnet,**
**daß** der verminderte Querschnitt der Vertiefung und/oder des Fixierkörpers der Kopplungsstirnfläche abgewandt ist und daß die Kopplungsstirnfläche (8) des Grundkörpers (2) und die vordere Fläche (28) des festgeklemmten Fixierkörpers (4) in einer gemeinsamen Ebene (30) liegen.

2. Faseroptisches Endstück nach Anspruch 1 mit mehreren in einer Ebene (12) und zueinander parallel verlaufenden V-förmige Nuten (14) für entsprechend mehrere Lichtwellenleiter (18) und mit parallel zu den V-förmige Nuten (14) verlaufenden, an der Kopplungsstirnfläche (8) angeordneten Ausrichtmitteln (22),
**dadurch gekennzeichnet, daß** die Ausrichtmittel (22) in der Ebene (12) der Nuten (14) angeordnet sind.

## Claims

1. Fibre-optic endpiece having a basic member (2), a fixing member (4) and an optical conductor (18) fixed in a groove (14) between the basic member (2) and the fixing member (4), the basic member (2) having a depression (6) provided with lateral guide structures (16), and the fixing member (4), which has a front and a rear surface, being provided with guide surfaces (24) adapted to the guide structures (16) of the basic member (2), being pushed into the depression (6) of the basic member along the guide structures (16) thereof, and being clamped in the pushed-in state in the depression (6) by means of interaction of its guide surfaces (24) with the guide structures (16) of the basic member, and the cross section of the depression (6) and/or of the fixing member (4) diminishing in the longitudinal direction of the depression, and the depression (6) and the groove (14) and the optical conductor (18) fixed therein extending up to the coupling end face (8), **characterized in that** the diminished cross section of the depression and/or of the fixing member is averted from the coupling end face, and **in that** the coupling end face (8) of the basic member (2), and the front face (28) of the clamped fixing member (4) lie in a common plane (30).

2. Fibre-optic endpiece according to Claim 1, having a plurality of V-shaped grooves (14), running in a plane (12) and parallel to one another, for a corresponding number of optical conductors (18), and having aligning means (22) running parallel to the V-shaped grooves (14) and arranged on the coupling end face (8), **characterized in that** the aligning means (22) are arranged in the plane (12) of the grooves (14).

## Revendications

1. Pièce terminale pour fibre optique
comprenant une embase (2), une pièce (4) d'immobilisation et un guide (18) d'ondes lumineuses fixé dans une rainure (14) entre l'embase (2) et la pièce (4) d'immobilisation, l'embase (2) ayant une cavité (6) munie de structures (16) latérales de guidage, et la pièce (4) d'immobilisation, ayant une surface avant et une surface arrière, étant munie de surfaces (24) de guidage adaptées aux structures (16) de guidage de l'embase (2), étant insérée dans la cavité (6) de l'embase le long de ses structures (16) de guidage et, à l'état inséré, étant serrée par coopération de ses surfaces (24) de guidage avec les structures (16) de guidage de l'embase dans la cavité (6)
et dans laquelle la section transversale de la cavité (6) et/ou de la pièce (4) d'immobilisation diminue dans la direction longitudinale de la cavité et
la cavité (6) ainsi que la rainure (14) et le guide (18) d'ondes lumineuses qui y est fixé s'étendant jusqu'à la surface (28) frontale de couplage,
**caractérisée**
**en ce que** la section transversale diminuée de la cavité et/ou de la pièce d'immobilisation est éloignée de la surface frontale de couplage et en ce que la surface (8) frontale de couplage de l'embase (2) et la surface (28) avant de la pièce (4) d'immobilisation serrée sont dans un plan (30) commun.

2. Pièce terminale pour fibre optique suivant la revendication 1, comprenant plusieurs rainures (14) en forme de V s'étendant dans un plan (12) et parallèlement entre elles pour plusieurs guides (18) d'ondes lumineuses correspondants et ayant des moyens (22) d'alignement s'étendant parallèlement aux rainures (14) en forme de V et prévues sur la surface (18) frontale de couplage,
**caractérisée en ce que** les moyens (22) d'alignement sont disposés dans le plan (12) des rainures (14).
